## Europäisches Patentamt
## European Patent Office
## Office européen des brevets

(19)

(11) Veröffentlichungsnummer: **0 075 852**
A2

(12) **EUROPÄISCHE PATENTANMELDUNG**

(21) Anmeldenummer: 82108753.3

(22) Anmeldetag: 22.09.82

(51) Int. Cl.³: **H 03 K 13/01**
**H 04 B 12/02**

(30) Priorität: 24.09.81 DE 3138023

(43) Veröffentlichungstag der Anmeldung:
06.04.83 Patentblatt 83/14

(84) Benannte Vertragsstaaten:
DE FR GB NL

(71) Anmelder: ROBERT BOSCH GMBH
Robert-Bosch-Strasse 7 Postfach 429
D-6100 Darmstadt(DE)

(72) Erfinder: Heitmann, Jürgen, Dipl.-Ing.
Ernst-Pasque-Strasse 36
D-6146 Alsbach-Hähnlein 1(DE)

(74) Vertreter: Gornott, Dietmar, Dipl.-Ing.
c/o Robert-Bosch GmbH Postfach 429
Robert-Bosch-Strasse 7
D-6100 Darmstadt(DE)

(54) Pulscodemodulationssystem.

(57) Um in einem Pulscodemodulationssystem bestimmte Spektralanteile zu betonen, wird vorgeschlagen, zwei aufeinanderfolgende Abtastwerte in geeigneter Weise miteinander zu verschachteln. So ergibt sich beispielsweise bei einer bitweisen Verschachtelung eine Betonung der vierfachen sowie bei einer 2-bitweisen Verschachtelung eine Betonung der zweifachen Abtastfrequenz.

Fig. 1

Croydon Printing Company Ltd.

EP 0 075 852 A2

Rl.-Nr. 2005/81
22.9.1981  FE/PLI/Go/Hö


ROBERT BOSCH GMBH, 7000 Stuttgart 1


Pulscodemodulationssystem


Stand der Technik

Die Erfindung geht aus von einem System nach der Gattung des Hauptanspruchs. Aufzeichnungs- und Übertragungskanäle weisen im allgemeinen frequenzabhängige Eigenschaften auf, an welche im Falle der Aufzeichnung bzw. Übertragung von PCM-Signalen eine Anpassung mit einem entsprechenden Code erforderlich ist. So können bei der magnetischen Aufzeichnung von digital codierten elektrischen Signalen häufig keine niederfrequenten Anteile oder Gleichspannungskomponenten der digitalen Signale aufgezeichnet bzw. wiedergegeben werden.

Ein einfaches Mittel zum Erhalt der Gleichstromfreiheit besteht darin, vorgegebenen Signalabschnitten - beispielsweise jedem Datenwort - eine Anzahl von Bits mit einem derartigen Pegel hinzuzufügen, daß sich für den gesamten Signalabschnitt die Anzahl der L- und H-Pegel aufheben. Diese triviale Möglichkeit scheidet jedoch in der Praxis aus, da in den meisten Fällen die Kanalkapazität begrenzt ist und somit möglichst wenig Redundanz übertragen werden sollte.

Bei einem bekannten Verfahren (Goldberg u.a.: "Optical Television Link Employing a Digitally Modulated Laser", Journal of the SMPTE, Vol. 88, Juni 1979, S. 414 ff.) wird das Digitalsignal von Abtastwert zu Abtastwert invertiert. Dieses Verfahren liefert jedoch nur für bestimmte Inhalte des zu übertragenden Signals befriedigende Ergebnisse.

Bei der Wahl eines Aufzeichnungs- bzw. Übertragungscodes ist jedoch nicht nur die unsere Bandgrenze des Kanals wesentlich, sondern ebenfalls die obere Bandgrenze sowie u.U. der gesamte Frequenzverlauf. Aufgabe der vorliegenden Erfindung ist es, ein Pulscodemodulationssystem vorzuschlagen, bei welchem die spektrale Verteilung des digitalen Signals weitgehend beeinflußbar und somit an die Eigenschaften eines Aufzeichnungs- bzw. Übertragungskanals anpassbar ist.

Vorteile der Erfindung

Das erfindungsgemäße System mit den kennzeichnenden Merkmalen des Hauptanspruchs hat den Vorteil, daß die spektrale Verteilung der digitalen Signale beeinflußbar ist, ohne daß zusätzliche Redundanz hinzugefügt wird. Durch die in den Unteransprüchen aufgeführten Maßnahmen sind vorteilhafte Weiterbildungen und Verbesserungen des im Hauptanspruch angegebenen Systems möglich. Das erfindungsgemäße System kann
besonders vorteilhaft zur Aufzeichnung oder Übertragung von
Videosignalen aber auch anderen Analogsignalen - wie beispielsweise Audiosignalen - verwendet werden. Ferner kann
es in vorteilhafter Weise mit dem System nach der früher
eingereichten Anmeldung P 31 13 397 kombiniert werden.


Zeichnung

Ein Ausführungsbeispiel der Erfindung ist in der Zeichnung
anhand mehrerer Figuren dargestellt und in der nachfolgenden Beschreibung näher erläutert.

Fig. 1   zeigt schematisch mehrere Ausführungsbeispiele für
         eine Verschachtelung der Datenworte gemäß der Erfindung,
Fig. 2   zeigt als Blockschaltbild eine Schaltungsanordnung
         zur Wandlung eines digitalen Signals entsprechend
         der Erfindung und
Fig. 3   zeigt ein Blockschaltbild einer Schaltung zur Rückwandlung eines solchen Signals.


Beschreibung der Erfindung

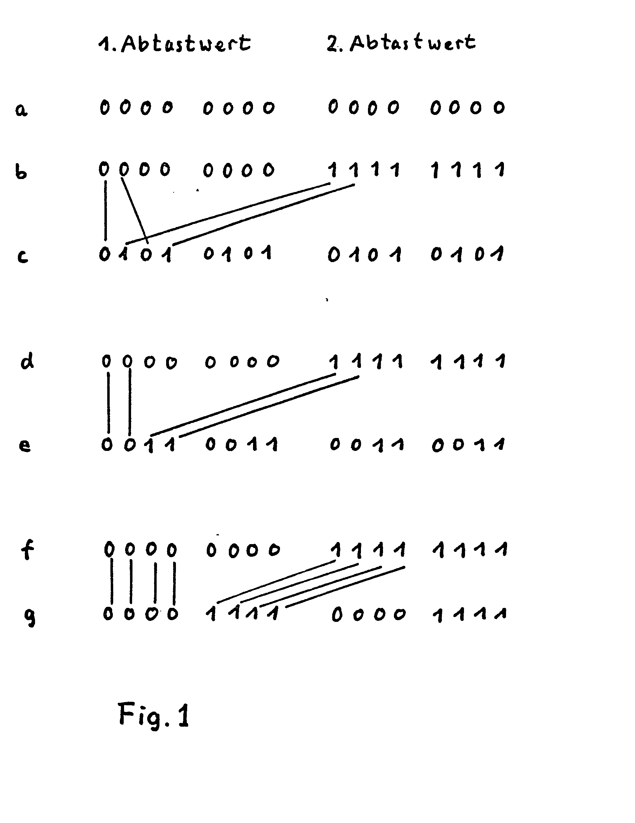

Den in Fig. 1 dargestellten Datenworten liegt beispielsweise die Codierung eines Fernsehsignals zugrunde, bei welcher
für Bildschwarz das Datenwort 0000 0000 vorgesehen ist. In
Zeile a sind zwei aufeinander folgende Abtastwerte für
Bildschwarz dargestellt. Durch die Invertierung jedes zweiten Abtastwertes ergeben sich die in Zeile b dargestellten
Datenworte. Da bei Fernsehsignalen relativ häufig Flächen gleicher oder ähnlicher Helligkeit vorkommen, sind die meisten zeitlich aufeinander folgenden Abtastwerte gleich oder ähnlich, so daß sich durch die Invertierung jedes zweiten Abtastwertes eine Hervorhebung der halben Abtastfrequenz ergibt.

In Zeile c der Fig. 1 ist nun eine Verschachtelung des ersten und zweiten Abtastwertes derart vorgenommen, daß jeweils ein Bit vom ersten Abtastwert, danach ein Bit vom zweiten Abtastwert, danach wiederum ein Bit vom ersten Abtastwert usw. übertragen bzw. aufgezeichnet wird. Innerhalb einer Abtastperiode $T_a$ ergeben sich vier Perioden des Digitalsignals. Es wird also eine Frequenz, welche der vierfachen Abtastfrequenz entspricht, hervorgehoben.

In den Zeilen d und e ist eine andere Verschachtelung der Abtastwerte dargestellt, und zwar werden jeweils zwei Bit des ersten und des zweiten Abtastwertes nacheinander übertragen. Daraus ergibt sich eine Hervorhebung der doppelten Abtastfrequenz. In den Zeilen f und g der Fig. 1 sind dann jeweils vier Bit eines Abtastwertes zusammengefaßt, so daß sich eine Hervorhebung der Abtastfrequenz ergibt.

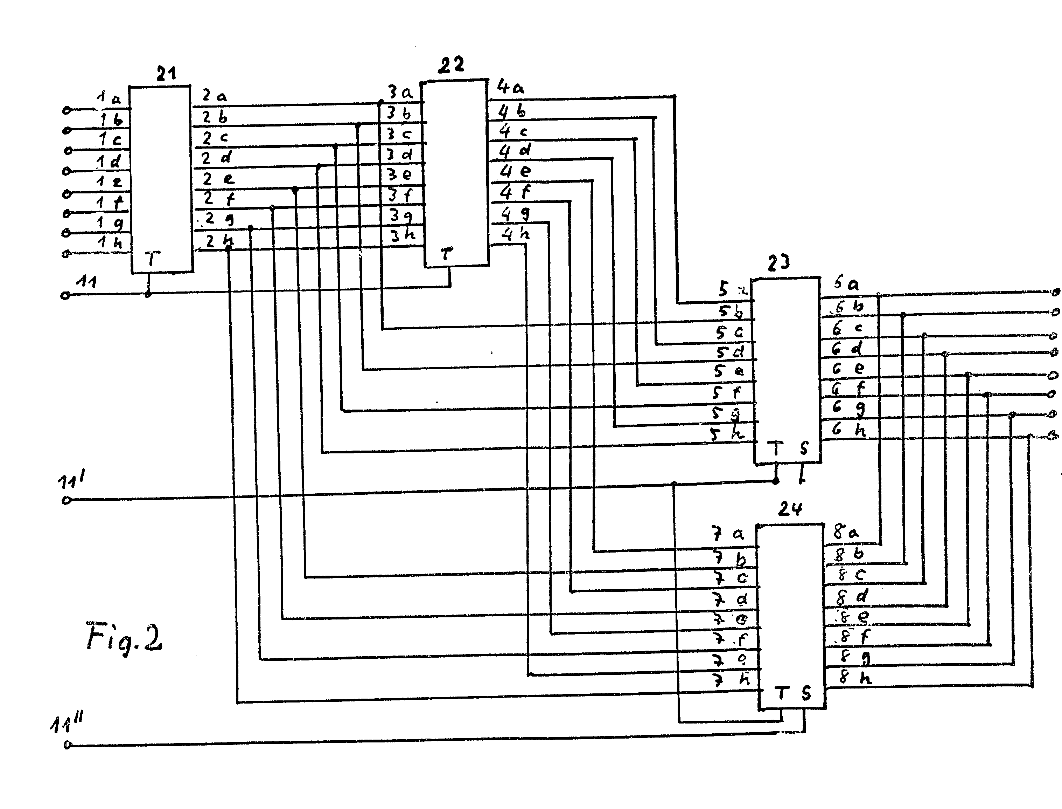

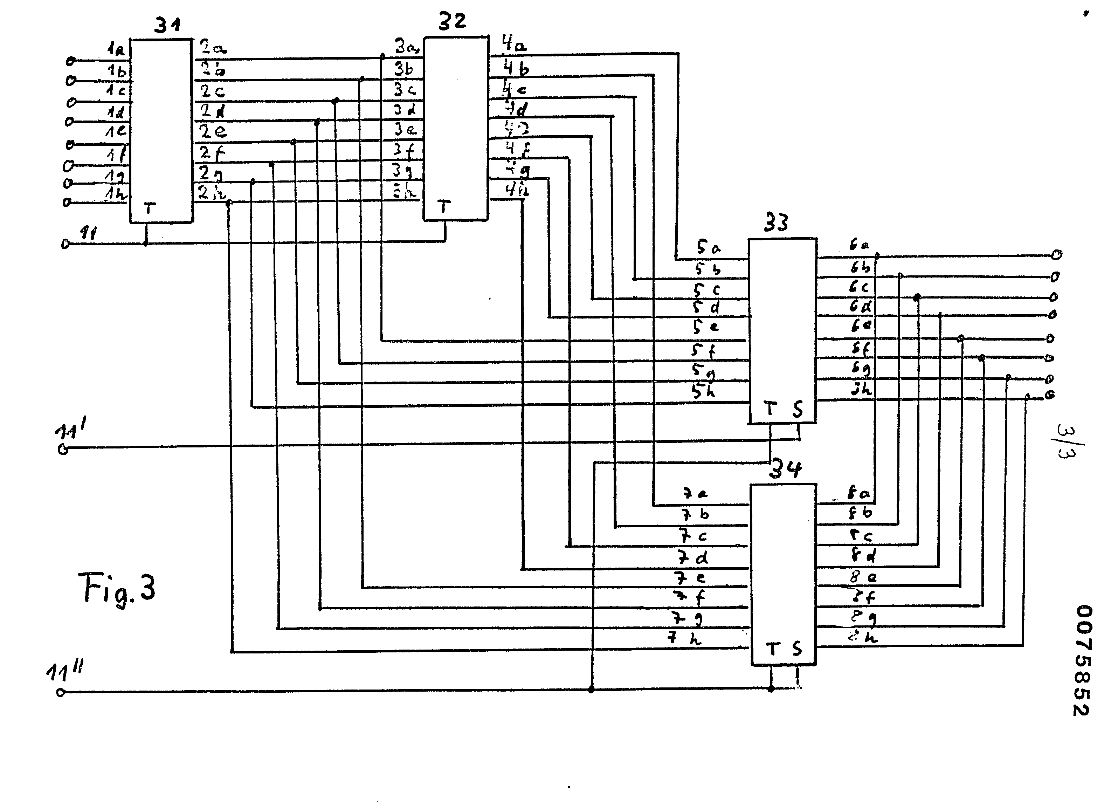

Die schaltungstechnische Realisierung des erfindungsgemäßen Systems ist mit den heute in der Digitaltechnik bekannten Schaltungen recht einfach und wird anhand der Figuren 2 und 3 beispielhaft beschrieben. In Fig. 2 stellen die Elemente 21,22,23,24 integrierte Bausteine dar, mit deren Hilfe die an den Eingängen 1,3,5,7, jeweils a bis h, anliegenden Signale auf ein zugeführtes Taktsignal hin in Speicher eingeschrieben werden und gleichzeitig an den Ausgängen 2,4,6,8, jeweils a bis h, zur Verfügung stehen. Jeder dieser Bausteine enthält acht sogenannte D-Flip-Flops. Die Eingänge 1a bis h der Schaltung 21 sind mit dem aufzuzeichnenden bzw. zu übertragenden Signal, welches in einer 8-Bit-Paralleldarstellung vorliegt, beaufschlagt. Über den weiteren Eingang 11 wird der Schaltung 21 ein Taktsignal zugeführt, welches mit dem Abtasttakt der vorangegangenen Analog-Digital-Wandlung übereinstimmt und im Falle von Fernsehsignalen beispielsweise eine Frequenz von 12 MHz aufweist. Bei Auftreten eines Taktimpulses werden die an den Eingängen anliegenden Signale in die Speicher der Schaltung 21 übernommen und gelangen einerseits zu den Eingängen 3a bis h der Schaltung 22 und andererseits zu jedem zweiten Eingang der Schaltungen 23 und 24, nämlich zu den Eingängen 5b, 5d, 5f, 5h, 7b, 7d, 7f und 7h.

Nach einem weiteren Taktimpuls befindet sich in den Speichern der Schaltung 22 der erste Abtastwert (s. Fig. 1a) und in den Speichern der Schaltung 21 der zweite Abtastwert, wobei eine nicht dargestellte Schaltung die Invertierung des zweiten Abtastwertes bereits vorgenommen hat.

An die Ausgänge 4a bis h der Schaltung 22 sind dann die noch verbleibenden Eingänge der Schaltungen 23 und 24 angeschlossen. Die Takteingänge T und Select-Eingänge S der Schaltungen 23 und 24 werden über die Eingänge 11' und 11'' mit Taktimpulsen halber Abtastfrequenz versorgt, wobei die bei 11' anliegenden Taktimpulse um eine halbe Taktperiode gegenüber denjenigen am Eingang 11'' versetzt sind. Die Ausgänge der Schaltungen 23 und 24 sind jeweils miteinander verbunden und bilden die Ausgänge der gesamten Schaltungsanordnung. An diese Ausgänge wird abwechselnd der Speicherinhalt der Schaltungen 23 und 24 übertragen. Da an den Eingängen der Schaltungen 23 und 24 abwechselnd Bits aus dem ersten und aus dem zweiten Abtastwert anliegen, ergibt sich die in Fig. 1c dargestellte Verschachtelung. Durch entsprechend anders gewählte Verbindungen der Ausgänge der Schaltungen 21 und 22 mit den Eingängen der Schaltungen 23 und 24 kann eine entsprechend andere Verschachtelung gewählt werden. Es ist jedoch auch möglich, die Verschachtelung variabel durch entsprechende Umschaltung der Verbindungen zu gestalten, beispielsweise durch programmierbare Festwertspeicher (PROM).

Fig. 3 stellt eine Schaltungsanordnung zur Rückwandlung der erfindungsgemäß aufgezeichneten oder übertragenen Signale dar. Es werden gleiche Bausteine wie bei der Schaltungsanordnung nach Fig. 2 verwendet, und zwar sind dieses die Schaltungen 31, 32, 33 und 34. Der Schaltung 31 werden die übertragenen bzw. wiedergegebenen Signale in Paralleldarstellung den Eingängen zugeführt. Sie werden mit Hilfe des bei 11 zugeführten Takts in die Speicher der Schaltung 31 übernommen und eine Taktperiode später in die Speicher der Schaltung 32. Die Ausgänge der Schaltung 31 sind außer mit den Eingängen der Schaltung 32 unter Berücksichtigung der vorgenommenen Verschachtelung mit einem Teil der Eingänge der Schaltungen 33 und 34 verbunden. Die übrigen Eingänge der Schaltungen 33 und 34 sind an die Ausgänge der Schaltung 32 angeschlossen. Die Takteingänge T und Selecteingänge S der Schaltungen 33 und 34 werden über die Eingänge 11' und 11'' mit einem Taktsignal mit halber Abtastfrequenz versorgt. An den wiederum zusammengefaßten Ausgängen der Schaltungen 33 und 34 steht dann in 8-Bit-Paralleldarstellung das ursprüngliche, den Eingängen der Schaltung 21 (Fig. 2) zugeführte Datenwort zur Verfügung.

Obwohl das beschriebene Verfahren der Wortverschachtelung in besonders geeigneter Weise mit der Invertierung jedes zweiten Abtastwertes kombiniert wird, kann in speziellen Anwendungsfällen auch das Verfahren der Wortverschachtelung allein sinnvolle Ergebnisse bringen. Da bei einem Videosignal Bildflächen vorherrschen - aufeinanderfolgende Datenworte sich also nur wenig oder gar nicht unterscheiden - führt die Wortverschachtelung in diesem Fall auf eine Herabsetzung aller im Datensignal enthaltenen Frequenzen. Wird die Verschachtelung derart vorgenommen, daß jeweils ein Bit vom ersten und danach ein Bit vom zweiten Abtastwert, danach wiederum ein Bit vom ersten Abtastwert usw. übertragen bzw. aufgezeichnet wird, so weist dieses Signal ein im Verhältnis 2:1 herabtransformiertes Daten-Signalspektrum auf.

Je nach spezieller Eigenschaft des Aufzeichnungs- bzw. Übertragungskanals bzw. des Signals kann es vorteilhaft sein, die Invertierung und/oder die Verschachtelung wiederholt durchzuführen, also die durch die Verschachtelung entstandenen Datenworte - gegebenenfalls nach Invertierung - wiederum zu verschachteln.

R1.-Nr. 2005/81
22.9.1981  FE/PLI/Go/Hö

**0075852**

ROBERT BOSCH GMBH, 7000 Stuttgart 1

<u>Ansprüche</u>

1.    Pulscodemodulationssystem, dadurch gekennzeichnet, daß Datenworte dadurch gebildet werden, daß aufeinanderfolgende Abtastwerte ineinander verschachtelt werden.

2.    Pulscodemodulationssystem nach Anspruch 1, dadurch gekennzeichnet, daß aufeinanderfolgende Abtastwerte vor der Verschachtelung invertiert werden.

3.    Pulscodemodulationssystem nach Anspruch 1 oder 2, dadurch gekennzeichnet, daß jeweils ein oder mehrere Bits von einem oder mehreren Abtastwerten miteinander verschachtelt werden.

4.    Pulscodemodulationssystem nach Anspruch 3, dadurch gekennzeichnet, daß jeweils n Bits von einem ersten Abtastwert und n-Bits von einem zweiten          Abtastwert abwechselnd übertragen bzw. aufgezeichnet werden.

5.    Pulscodemodulationssystem nach Anspruch 3 oder 4, dadurch gekennzeichnet, daß n eine ganze Zahl ist, durch welche die Zahl der Bits pro Abtastwert teilbar ist.

6.    Pulscodemodulationssystem nach Anspruch 1 oder 2, dadurch gekennzeichnet  daß aufeinanderfolgende Datenworte ineinander verschachtelt werden.

- 2 -

**0075852**

7.     Pulscodemodulationssystem nach Anspruch 7, dadurch gekennzeichnet, daß vor der Verschachtelung der Datenworte aufeinander folgende Datenworte invertiert werden.

1. Abtastwert     2. Abtastwert

a    0 0 0 0   0 0 0 0    0 0 0 0   0 0 0 0

b    0 0 0 0   0 0 0 0    1 1 1 1   1 1 1 1

c    0 1 0 1   0 1 0 1    0 1 0 1   0 1 0 1

d    0 0 0 0   0 0 0 0    1 1 1 1   1 1 1 1

e    0 0 1 1   0 0 1 1    0 0 1 1   0 0 1 1

f    0 0 0 0   0 0 0 0    1 1 1 1   1 1 1 1

g    0 0 0 0   1 1 1 1    0 0 0 0   1 1 1 1

Fig. 1

Fig. 2

2/3

0075852

0075852

Fig.3